(19) Europäisches Patentamt
European Patent Office
Office européen des brevets

(11) **EP 1 540 160 B1**

(12) **EUROPÄISCHE PATENTSCHRIFT**

(45) Veröffentlichungstag und Bekanntmachung des Hinweises auf die Patenterteilung:
**11.04.2007 Patentblatt 2007/15**

(51) Int Cl.:
*F02D 41/02* (2006.01)   *F01N 3/08* (2006.01)
*F01N 11/00* (2006.01)

(21) Anmeldenummer: 03757790.5

(22) Anmeldetag: **05.09.2003**

(86) Internationale Anmeldenummer:
**PCT/EP2003/009845**

(87) Internationale Veröffentlichungsnummer:
**WO 2004/022952 (18.03.2004 Gazette 2004/12)**

(54) **VERFAHREN ZUM BETREIBEN EINES STICKOXID-SPEICHERKATALYSATORS EINER BRENNKRAFTMASCHINE INSBESONDERE EINES KRAFTFAHRZEUGES**

METHOD FOR OPERATING A NITROGEN OXIDE STORAGE-TYPE CATALYTIC CONVERTER OF AN INTERNAL COMBUSTION ENGINE, PARTICULARLY OF A MOTOR VEHICLE

PROCEDE PERMETTANT DE FAIRE FONCTIONNER UN POT CATALYTIQUE A ACCUMULATION DE DIOXYDE D'AZOTE D'UN MOTEUR A COMBUSTION INTERNE NOTAMMENT D'UN VEHICULE AUTOMOBILE

(84) Benannte Vertragsstaaten:
**DE FR GB**

(30) Priorität: **07.09.2002 DE 10241500**

(43) Veröffentlichungstag der Anmeldung:
**15.06.2005 Patentblatt 2005/24**

(73) Patentinhaber: **AUDI AG**
**85045 Ingolstadt (DE)**

(72) Erfinder: **ODENDALL, Bodo**
**85101 Lenting (DE)**

(74) Vertreter: **Krah, Annette**
**Audi AG,**
**Patentabteilung**
**85045 Ingolstadt (DE)**

(56) Entgegenhaltungen:
**EP-A- 0 997 617      EP-A- 1 061 245**
**EP-A- 1 167 712      EP-A- 1 193 376**
**WO-A- 02/14658       DE-A- 10 003 612**

**Beschreibung**

Die Erfindung betrifft ein Verfahren zum Betreiben eines Stickoxid-Speicherkatalysators einer Brennkraftmaschine insbesondere eines Kraftfahrzeuges nach dem Oberbegriff des Anspruchs 1.

In der heutigen Fahrzeugtechnik werden Ottomotoren als Brennkraftmaschinen mit einer Benzin-Direkteinspritzung anstatt einer konventionellen Saugrohreinspritzung bevorzugt, da derartige Brennkraftmaschinen gegenüber den herkömmlichen Ottomotoren deutlich mehr Dynamik aufweisen, bezüglich Drehmoment und Leistung besser sind und gleichzeitig eine Verbrauchssenkung um bis zu 15 % ermöglichen. Möglich macht dies vor allem eine sogenannte Schichtladung im Teillastbereich, bei der nur im Bereich der Zündkerze ein zündfähiges Gemisch benötigt wird, während der übrige Brennraum mit Luft befüllt wird. Dadurch kann der Motor entdrosselt gefahren werden, was zu reduzierten Ladungswechseln führt. Zusätzlich profitiert der Benzin-Direkteinspritzer von den reduzierten Wärmeverlusten, da die Luftschichten um die Gemischwolke herum zum Zylinder und zum Zylinderkopf hin isolieren. Da herkömmliche Brennkraftmaschinen, die nach dem Saugrohrprinzip arbeiten bei einem derartigen hohen Luftüberschuss, wie er bei der Benzin-Direkteinspritzung vorliegt, nicht mehr zündfähig sind, wird bei diesem Schichtlademodus das Kraftstoff-Gemisch um die zentral im Brennraum positionierte Zündkerze konzentriert, während sich in den Randbereichen des Brennraums reine Luft befindet. Um das Kraftstoff-Gemisch um die zentral im Brennraum positionierte Zündkerze herum zentrieren zu können, ist eine gezielte Luftströmung im Brennraum erforderlich, eine sogenannte Tumbleströmung. Dazu wird im Brennraum eine intensive, walzenförmige Strömung ausgebildet und der Kraftstoff erst im letzten Drittel der Kolbenaufwärtsbewegung eingespritzt. Durch die Kombination von gezielter Luftströmung und spezieller Geometrie des Kolbens, der z. B. über eine ausgeprägte Kraftstoff- und Strömungsmulde verfügt, wird der besonders fein zerstäubte Kraftstoff in einem sogenannten "Gemischballen" optimal um die Zündkerze konzentriert und sicher entflammt. Für die jeweils optimale Anpassung der Einspritzparameter (Einspritzzeitpunkt, Kraftstoffdruck) sorgt die Motorsteuerung.

Derartige Brennkraftmaschinen können daher entsprechend lange im Magerbetrieb betrieben werden, was sich, wie dies oben bereits dargelegt worden ist, positiv auf den Kraftstoffverbrauch insgesamt auswirkt. Dieser Magerbetrieb bringt jedoch den Nachteil mit sich, dass die Stickoxide (NOx) im mageren Abgas vom 3-Wege-Kat nicht reduziert werden können. Um die Stickoxid-Emissionen im Rahmen vorgeschriebener Grenzen, z. B. des Euro-IV-Grenzwertes zu halten, werden in Verbindung mit derartigen Brennkraftmaschinen regelmäßig Stickoxid-Speicherkatalysatoren eingesetzt. Diese Stickoxid-Speicherkatalysatoren werden so betrieben, dass die von der Brennkraftmaschine erzeugten Stickoxide in einer ersten Betriebsphase als Magerbetriebsphase in den Stickoxid-Speicherkatalysator eingespeichert werden. Diese erste Betriebsphase oder Magerbetriebsphase des Stickoxid-Speicherkatalysators wird auch als Einspeicherphase bezeichnet. Mit zunehmender Dauer der Einspeicherphase nimmt der Wirkungsgrad des Stickoxid-Speicherkatalysators ab, was zu einem Anstieg der Stickoxid-Emissionen hinter dem Stickoxid-Speicherkatalysator führt. Die Ursache für die Abnahme des Wirkungsgrades liegt in der Zunahme des Stickoxid-Füllstandes des Stickoxid-Speicherkatalysators. Der Anstieg der Stickoxid-Emissionen hinter dem Stickoxid-Speicherkatalysator kann überwacht und nach Überschreiten eines vorgebbaren Schwellenwertes eine zweite Betriebsphase des Stickoxid-Speicherkatalysators, eine sogenannte Ausspeicherphase oder Entladephase, eingeleitet werden. Während dieser zweiten Betriebsphase wird dem Abgas der Brennkraftmaschine ein Reduktionsmittel hinzugegeben, das eingespeicherte Stickoxide zu Stickstoff und Sauerstoff reduziert. Als Reduktionsmittel werden regelmäßig Kohlenwasserstoffe (HC) und/oder Kohlenmonoxid (CO) verwendet, die im Abgas einfachst durch eine fette Einstellung des Kraftstoff-/Luftgemisches erzeugt werden können. Gegen Ende der Entladephase ist ein Großteil des eingespeicherten Stickoxids reduziert und immer weniger des Reduktionsmittels trifft auf Stickoxid, das es zu Sauerstoff und Stickstoff reduzieren kann. Deshalb steigt gegen Ende der Entladephase der Anteil an Reduktionsmittel in dem Abgas hinter dem Stickoxid-Speicherkatalysator an. Durch eine entsprechende Analyse des Abgases hinter dem Stickoxid-Speicherkatalysator mittels z. B. einem Sauerstoff-Sensor kann dann das Ende der Entladephase eingeleitet werden und wieder auf die Magerbetriebsphase umgeschaltet werden. Bei den bekannten Stickoxid-Speicherkatalysatoren wird dieses Umschalten in zeitlichen Abständen von z. B. 30 bis 60 Sekunden durchgeführt, wobei die Regeneration, d. h. die Entladephase, ca. 2 bis 4 Sekunden dauert.

Zur Ermittlung eines Gütefaktors zur Bewertung der Speicherfähigkeit eines Stickoxid-Speicherkatalysators ist aus der WO 02/14658A1 ein Verfahren bekannt, bei dem während einer Einspeicherphase ein Stickoxid-Rohmassenstrom vor dem Stickoxid-Speicherkatatysator und ein Stickoxid-Massenstrom hinter dem Stickoxid-Speicherkatalysator ermittelt wird und der Zustand des Stickoxid-Speicherkatalysators aus den beiden ermittelten Werten für den Stickoxid-Rohmassenstrom vor und den Stickoxid-Massenstrom hinter dem Stickoxid-Speicherkatalysator bestimmt wird. Dazu werden die beiden ermittelten Werte für den Stickoxid-Rohmassenstrom vor und für den Stickoxid-Massenstrom hinter dem Stickoxid-Speicherkatalysator jeweils über eine vorgegebene Zeitdauer aufintegriert und der Zustand des Stickoxid-Speicherkatalysators durch den Quotienten aus den aufintegrierten Werten für den Stickoxid-Rohmassenstrom vor und den Stickoxid-Massenstrom hinter dem Stickoxid-Speicherkatalysator bestimmt. Hierdurch wird somit der Gütefaktor erhalten, der eine Aussage über die Speicherfähigkeit des Stickoxid-Speicherkatalysators ermöglicht, und zwar im Hinblick auf eine Katalysatoralterung durch eine Schwefelvergiftung bzw. eine thermische Schädigung oder ein alterungsbedingtes Nachlassen der Speicherfähigkeit. Insbesondere soll dadurch der Vergiftungsgrad des Katalysators mit Schwefel ermittelt werden und so der Schwefelgehalt in dem Steuergerät der Brennkraftmaschine korrigiert werden, um eine Schwefelregenerierung zu optimieren. Denn der in den Kraftstoffen enthaltene Schwefel führt zu einer Speicherkatalysator-Vergiftung, d. h. zu einer dauerhaften Einlagerung des Schwefels im Speicherkatalysator, die die Speicherkapazität für die Stickoxide reduziert. Im Stickoxid-Speicherkatalysator werden die Stickoxide in Form von Nitraten eingelagert, während der Schwefel in Form von Sulfaten eingelagert wird. Da die Sulfate chemisch stabiler als die Nitrate sind, ist ein Sulfatzerfall bei der Stickoxid-Regeneration nicht möglich. Erst bei Katalysatortemperaturen oberhalb 650° C kann unter reduzierenden Bedingungen ein Schwefelaustrag erzielt werden. Derartige hohe Katalysator-Temperaturen werden insbesondere im Stadtverkehr jedoch regelmäßig nicht erreicht, so dass es vor allem im Stadtverkehr zu einer schleichenden Anlagerung von Schwefel im Stickoxid-Speicherkatalysator kommt, der zur Alterung des Stickoxid-Speicherkatalysators führt. Diese Alterung muss daher bei der Auslegung und beim Betreiben eines Stickoxid-Speicherkatalysators stets berücksichtigt werden, um sicherzustellen, dass die Katalysatoralterung über die vorgesehene Lebensdauer des Katalysators zur Einhaltung der vorgegebenen Abgasgrenzwerte im Hinblick auf die Stickoxidemissionen bei einem gealterten Stickoxid-Speicherkatalysator führt. Hierzu ist ein gattungsgemäßes Verfahren zum Betreiben eines Stickoxid-Speicherkatalysators einer Brennkraftmaschine eines Kraftfahrzeugs bereits allgemein bekannt, bei dem von der Brennkraftmaschine erzeugte Stickoxide in einer ersten Betriebsphase (Magerphase) als Einspeicherphase für eine bestimmte Einspeicherzeit in den Stickoxid-Speicherkatalysator eingespeichert werden, und bei dem nach Ablauf der Einspeicherzeit zu einem bestimmten Umschaltzeitpunkt für eine bestimmte Entladezeit auf eine zweite Betriebsphase als Entladungsphase umgeschalten wird, in der die während der Einspeicherzeit eingespeicherten Stickoxide aus dem Stickoxid-Speicherkatalysator ausgespeichert werden. Der Umschaltzeitpunkt in der Einspeicherphase wird in Abhängigkeit von einem Stickoxid-Schlupf als Differenz zwischen dem in den Stickoxid-Speicherkatalysator eingeströmten Stickoxid-Massenstrom und dem aus dem Stickoxid-Speicherkatalysator ausgeströmten Stickoxid-Massenstrom jeweils bezogen auf die Einspeicherzeit ermittelt.

Konkret ist hier, um den vorgegebenen Abgasgrenzwert über die gesamte Lebensdauer eines Stickoxid-Speicherkatalysators einhalten zu können, bei einer derartigen Betriebsweise die Anzahl der Entladungen so an die pro Be- und Entladezyklus ausgespeicherte Stickoxidmenge anzupassen, dass bei einer gegenüber einem neuen Stickoxid-Speicherkatalysator verringerten Speicherfähigkeit eines gealterten Stickoxid-Speicherkatalysators die während der Abgastest-Zeitspanne abgegebene Stickoxidmenge den vorgegebenen Abgasgrenzwert nicht überschreitet. Diese pro Beladezyklus vorgegebene Stickoxid-Abgabemenge für einen gealterten Speicherkatalysator ist eine absolute Größe und stellt den absoluten Stickoxid-Schlupf dar, d. h. dass sobald der Speicherkatalysator mit dieser Stickoxidmenge beladen ist, eine Entladung stattfindet. Dieser absolute Stickoxid-Schlupf als feststehender Wert gilt sowohl für den neuen als auch für den gealterten Stickoxid-Speicherkatalysator.

Da pro Entladung ein fettes Gemisch von Lambda größer 1 benötigt wird, steigt mit der zunehmenden Zahl der Entladungen im Laufe des Alterns eines Speicherkatalysators auch der Kraftstoffverbrauch gegenüber demjenigen eines neuen Speicherkatalysators.

Aufgabe der Erfindung ist es daher, ein Verfahren zum Betrieb eines Stickoxid-Speicherkatalysators zur Verfügung zu stellen, mit dem der Kraftstoffverbrauch insbesondere für neue Speicherkatalysatoren reduziert werden kann.

Diese Aufgabe wird gelöst mit den Merkmalen des Anspruchs 1.

Gemäß Anspruch 1 wird zur Festlegung des Umschaltzeitpunktes von der Einspeicherphase auf die Entladephase ein relativer Stickoxid-Schlupf ermittelt dergestalt, dass der Stickoxid-Massenstrom vor dem Stickoxid-Speicherkatalysator und der Stickoxid-Massenstrom nach dem Stickoxid-Speicherkatalysator jeweils über den Zeitraum einer Magerphase aufintegriert werden und der Quotient der Integralwerte in eine Relativbeziehung mit einem vorgebbaren, von einem Abgasgrenzwert ableitbaren Stickoxid-Konvertierungsgrad gebracht werden dergestalt, dass beim Vorliegen dieser vorgegebenen Umschaltbedingung das Umschalten von der Einspeicherphase auf die Entladephase zum hinsichtlich Kraftstoffverbrauch und Einspeicherpotential optimierten Umschaltzeitpunkt durchgeführt wird.

Vorteilhaft wird hier somit als Bezugsgröße für das Umschalten auf die in eine Relativbeziehung zueinander gebrachten Zeitintegrale der Stickoxidmenge vor und nach dem Stickoxid-Speicherkatalysator in Verbindung mit einem vorgebbaren Konvertierungsgrad abgestellt. Das heißt, dass bei dieser Entladestrategie die Endrohremissionen bezüglich Stickoxid unabhängig vom Alterungszustand des Katalysators sind und des weiteren das Abgasergebnis auch unabhängig von der Anzahl der Entladungen pro Zeiteinheit ist. Mit einer derartigen Betriebsweise kann vorteilhaft die jeweils im Katalysator vorhandene Einspeicherungskapazität voll ausgenützt werden, was sich beim neuen bzw. neueren Katalysator in einem gegenüber einem gealterten Speicherkatalysator einem reduzierten Kraftstoffverbrauch niederschlägt, da der neue bzw. neuere Katalysator weniger oft entladen werden braucht als ein gealterter Katalysator, da der relative Schlupf, bei dem entladen werden soll, erst zu einem späteren Zeitpunkt als dies beim gealterten Speicherkatalysator der Fall ist, erreicht wird. Beim gealterten Speicherkatalysator steigt bei der erfindungsgemäßen Betriebsweise nur die Anzahl der Entladungen, wobei diese jedoch unabhängig vom Abgasergebnis als solchem sind. Denn mit der erfindungsgemäßen Betriebsweise wird stets nur dann entladen, wenn dies erforderlich wird, um nicht den vorgegebenen Abgasgrenzwert pro Zeiteinheit zu überschreiten, da die aufintegrierten Stickoxid-Massenströme vor und nach dem Stickoxid-Speicherkatalysator hier in Bezug zu dem für die Einhaltung eines Abgasgrenzwertes erforderlichen Konvertierungsgrad gesetzt werden. Im Gegensatz zur Betriebsweise gemäß dem Stand der Technik braucht aufgrund der Ausnutzung des vollen Einspeicherpotentials ein neuer Speicherkatalysator auf eine bestimmte Zeitdauer gesehen weniger oft entladen werden als dies beim neuen Speicherkatalysator gemäß dem Stand der Technik der Fall ist, bei dem das Einspeicherpotential eines neuen Speicherkatalysators nicht voll ausgenutzt werden kann. Denn bei der Betriebsweise gemäß dem Stand der Technik gilt die pro Entladung vorgegebene absolute Stickoxid-Schlupfmenge als fester Wert sowohl für den alten als auch für den neuen Speicherkatalysator, so dass auch der neue Speicherkatalysator beim Stand der Technik stets dann eine Entladung durchzuführen hat, wenn dieser von vorneherein festgelegte absolute Stickoxid-Schlupf erreicht ist, und dies obwohl hier der neue Stickoxid-Speicherkatalysator noch weiter Stickoxide einlagern könnte. Im Gegensatz dazu wird bei der erfindungsgemäßen Betriebsweise durch die Relativbeziehung stets das gesamte momentane Einspeicherpotential ausgenutzt, so dass gegenüber der Betriebsweise beim Stand der Technik insbesondere bezogen auf einen neuen bzw. neueren Speicherkatalysator eine erhebliche Kraftstoffeinsparung erzielt wird. Denn bei der Betriebsweise gemäß dem Stand der Technik wird, da beim neuen bzw. neueren Speicherkatalysator die Entladung bereits früher als erforderlich eingeleitet wird, auch ein fettes Gemisch früher als nötig zugegeben.

Gemäß einer besonders bevorzugten Verfahrensführung ist nach Anspruch 2 vorgesehen, dass der relative Schlupf der Quotient aus dem Integral über den Stickoxid-Massenstrom nach dem Stickoxid-Katalysator und aus dem Integral über dem Stickoxid-Massenstrom vor dem Stickoxid-Speicherkatalysator ist. Dieser Quotient wird zur Ermittlung der Umschaltbedingung gleich einem vorgebbaren Umschaltschwellwert K gesetzt, der auf den vorgebbaren Stickoxid-Konvertierungsgrad zurückgeht, so dass beim Erfüllen dieser Umschaltbedingung ein Umschalten von der Einspeicherphase am Ende der somit ermittelten Einspeicherzeit auf die Entladungsphase erfolgt. Beispielsweise genügt dieser Umschaltschwellwert K nach Anspruch 3 folgender Gleichung:

$$K = 1 - \text{vorgegebene Stickoxidkonvertierungsrate}$$

Die vorgegebene Stickoxid-Konvertierungsrate ist dabei stets kleiner 1, beträgt vorzugsweise jedoch wenigstens 0,8, höchst bevorzugt im Hinblick auf die Euro-IV-Abgasgrenzwertnorm jedoch in etwa 0,95.

Nach Anspruch 4 wird der Stickoxid-Massenstrom vor dem Stickoxid-Speicherkatalysator modelliert. Grundsätzlich könnte dieser Stickoxid-Massenstrom vor dem Stickoxid-Speicherkatalysator jedoch auch gemessen werden, z. B. mittels eines Stickoxid-Sensors. Ein derartiger Stickoxid-Sensor wird nach Anspruch 5 vorteilhaft jedoch nach dem Stickoxid-Speicherkatalysator vorgesehen, um den Stickoxid-Massenstrom nach dem Stickoxid-Speicherkatalysator zu messen. Insbesondere für die Zeiten, in denen der Stickoxid-Sensor nicht betriebsbereit ist, kann der Stickoxid-Massenstrom nach dem Stickoxid-Speicherkatalysator auch modelliert werden. Unter Modellierung wird dabei verstanden, dass der Stickoxid-Rohmassenstrom vor dem Stickoxid-Speicherkatalysator bzw. der Stickoxid-Massenstrom nach dem Stickoxid-Speicherkatalysator einem Stickoxid-Einspeichermodell bzw. einem Stickoxid-Rohemissionsmodell entnommen werden. In den Modellen wird z. B. aus dem Betriebspunkt der Brennkraftmaschine beschreibenden Parametern, z. B. der zugeführten Kraftstoffmasse oder Luftmasse, dem Drehmoment, etc., der Stickoxid-Rohmassenstrom modelliert. Ebenso kann der modellierte Stickoxid-Rohmassenstrom aber auch einer Kennlinie oder einem Kennfeld entnommen werden.

Gemäß einer besonders bevorzugten Ausführungsform nach Anspruch 6 wird ein mittels dem Stickoxid-Sensor nach dem Stickoxid-Speicherkatalysator gemessenes Stickoxid-Massenstromsignal einer Steuer- und Regeleinrichtung zugeführt, in der der nach dem Stickoxid-Speicherkatalysator gemessene Stickoxid-Massenstrom über die Zeit aufintegriert wird und der so ermittelte Integralwert zusammen mit dem Integralwert des Stickoxid-Massenstroms vor dem Stickoxid-Speicherkatalysator in eine Beziehung mit dem vorgebbaren Stickoxid-Konvertierungsgrad gebracht wird zur Ermittlung des Umschaltzeitpunktes. Bei Vorliegen der Umschaltbedingung gibt dann die Steuerung- und Regeleinrichtung ein Steuersignal ab, um das Umschalten des Stickoxid-Speicherkatalysators von der Einspeicherphase auf die Entladephase durchzuführen. Die erfindungsgemäße Verfahrensführung bewirkt somit hier auch einen besonders günstigen bauteiltechnischen Aufwand, da keine zusätzlichen Bauteile erforderlich sind, sondern die ohnehin vorhandenen Bestandteile zur erfindungsgemäßen Betriebsweise benützt werden können.

Die Steuer- und Regeleinrichtung wird gemäß Anspruch 7 separat beansprucht. Die sich hierdurch ergebenden Vorteile wurden bereits in Verbindung mit der Verfahrensführung näher erläutert, so dass hier nicht mehr näher darauf eingegangen wird.

Die Erfindung wird nachfolgend anhand einer Zeichnung näher erläutert.

Es zeigen:

Fig. 1    ein Diagramm der Stickoxidmenge über der Zeit für einen neuen Stickoxid-Speicherkatalysator,

Fig. 2 ein schematisches Diagramm der Stickoxidmenge über der Zeit für einen gealterten Stickoxid-Speicherkatalysator,

Fig. 3 eine schematische vergleichende Darstellung der Entladezyklen eines neuen und gealterten Stickoxid-Speicherkatalysators,

Fig. 4 ein schematisches Diagramm des Verbrauchs über den Emissionen mit Applikationsünien für einen neuen und einen alten Stickoxid-Speicherkatalysator im Vergleich, und

Fig. 5 eine schematische Darstellung der Stickoxidmenge über der Zeit für eine Betriebsweise gemäß dem Stand der Technik.

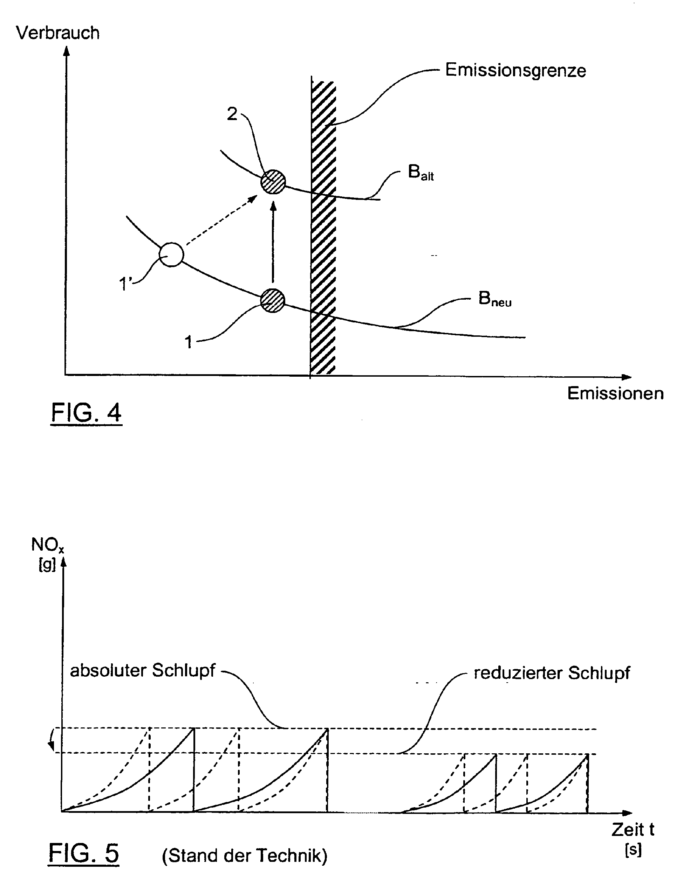

In Fig. 5 ist eine schematische Darstellung der Stickoxidmenge über der Zeit für eine Betriebsweise eines Stickoxid-Speicherkatalysators gemäß dem Stand der Technik dargestellt. So ist hier im linken Teil des Diagramms bezogen auf den fest vorgegebenen absoluten Stickoxid-Schlupf die maximale Einspeicherzeit dargestellt, und zwar mit durchgezogenen Linien für den neuen Speicherkatalysator und strichliert für den gealterten Speicherkatalysator. Rein schematisch ist hier dargestellt, dass die Anzahl der Entladungen beim gealterten Speicherkatalysator höher ist, so dass, da jedes Mal in etwa eine gleiche Menge an Stickoxiden pro Zeiteinheit eingespeichert ist, während einer bestimmten Zeitspanne beim gealterten Stickoxidkatalysator eine höhere Stickoxidmenge abgegeben wird als dies während der gleichen Zeitspanne beim neuen Speicherkatalysator der Fall ist. Dies führt dazu, dass hier die Anzahl der Entladungen pro Zeitspanne direkt in das Abgasergebnis mit eingeht und somit in Bezug auf die Einhaltung der Abgasgrenzwerte pro vorgegebener Abgasgrenzwert-Zeiteinheit auf die Anzahl der möglichen Entladungen eines gealterten Speicherkatalysators am Ende dessen Lebensdauer abzustellen ist und daher der fest vorgegebene absolute Schlupfwert entsprechend reduziert werden muss, um die Abgasnorm zu erfüllen. Dies ist im rechten Teil des Diagramms schematisch dargestellt und führt somit dazu, dass das Einspeicherpotenzial des neuen Speicherkatalysators nicht ausgenutzt wird. Da nun aber bei dieser Betriebsweise - auf Grund des fest vorgegebenen absoluten Schlupfes - beim neuen Speicherkatalysator die Entladung bereits früher als eigentlich nötig eingeleitet wird, wirkt sich dies beim neuen Speicherkatalysator nachteilig auf den Kraftstoffverbrauch aus, da ein fetteres Gemisch früher als nötig zugegeben wird. Das heißt, dass bezogen auf eine bestimmte Zeitspanne eigentlich mehr fettes Gemisch zugegeben wird als die während dieser Zeitspanne erforderlich gewesen wäre, wenn die eigentlich vorhandene Speicherkapazität eines neuen bzw. neueren Speicherkatalysators vollständig ausgenutzt worden wäre.

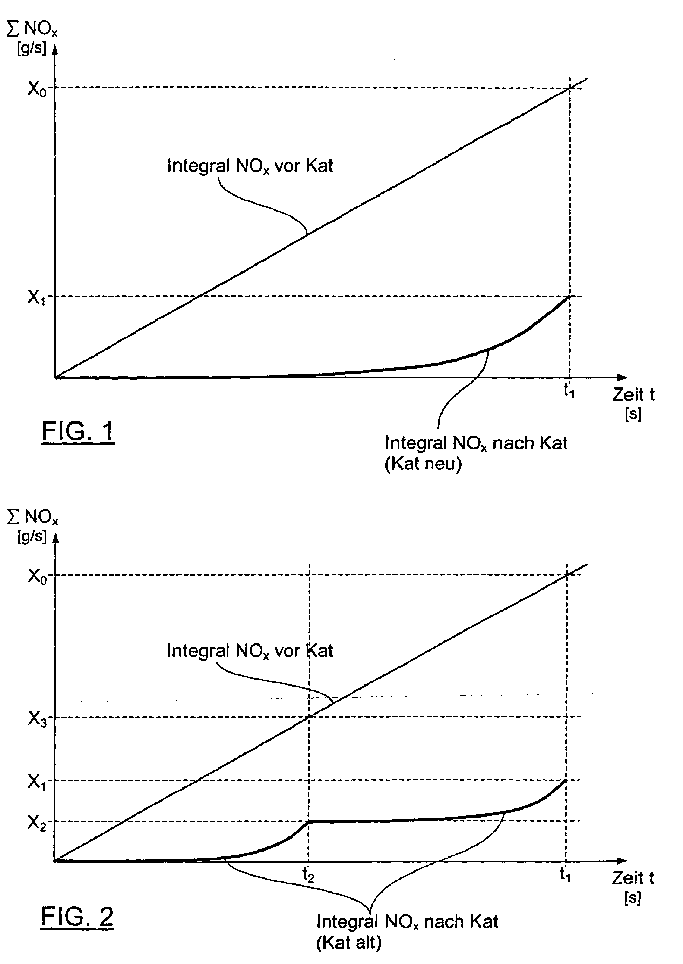

In den Fig. 1 und 2 ist lediglich zur Veranschaulichung des Prinzips der erfindungsgemäßen Verfahrensweise schematisch und beispielhaft jeweils die Stickoxidmenge über der Zeit aufgetragen, wobei die Stickoxidmenge aufsummiert dargestellt ist. Ausgehend von einer lediglich zur einfacheren Veranschaulichung angenommenen konstanten Anlieferung einer konstanten Stickoxidmenge über der Zeit ergibt das Integral über den Stickoxid-Massenstrom vor dem Stickoxid-Speicherkatalysator über die betrachtete Zeitspanne einen linearen Anstieg, wie dies in den Fig. 1 und 2 schematisch dargestellt ist. Bei einem neuen Stickoxid-Speicherkatalysator ist noch die volle Speicherkapazität vorhanden, d. h., es hat noch z. B. keine Vergiftung durch Schwefel stattgefunden, so dass für eine Einspeicherzeit $t_1$ so lange Stickoxide in den Stickoxid-Speicherkatalysator eingelagert werden, bis der Quotient aus dem Integral über den Stickoxid-Massenstrom nach dem Stickoxid-Speicherkatalysator und aus dem Integral über den Stickoxid-Massenstrom vor dem Stickoxid-Speicherkatalysator gleich einem vorgegebenen, von einem Abgasgrenzwert abgeleiteten Umschaltschwellwert K ist, der auf einen vorgegebenen, von einem Abgasgrenzwert abgeleiteten Stickoxid-Konvertierungsgrad zurückgeht, so dass beim Erfüllen dieser Umschaltbedingung nach Ablauf der Einspeicherzeit $t_1$ ein Umschalten auf eine hier nicht mehr dargestellte Entladungsphase erfolgt, in der fettes Gemisch zum Ausspeichern der Stickoxide zugeführt wird. Beispielsweise beträgt der Umschaltschwellwert K bei einer vorgegebenen Stickoxid-Konvertierungsrate von 95 %, d. h. von 0,95, dann 0,05 bezogen auf 1 (= 100 %) als Bezugsgröße. Dies bedeutet, dass im vorliegenden Fall eines neuen Stickoxid-Speicherkatalysators dann die Entladungsphase eingeleitet wird, wenn der Quotient aus den beiden oben angegebenen Integralen gleich 0,05 oder 5 % ist.

In der Fig. 2 ist nun im wesentlichen dasselbe für einen gealterten Stickoxid-Speicherkatalysator dargestellt, d. h. bei einem Stickoxid-Speicherkatalysator der z. B. bereits stark mit Schwefel vergiftet ist. Wie dies aus der lediglich schematisch und beispielhaften Darstellung der Fig. 2 ersichtlich wird, sind bei einem derartigen gealterten Stickoxid-Speicherkatalysator innerhalb der gleichen betrachteten Zeitspanne $t_1$ z. B. lediglich zwei Entladungen erforderlich, und zwar einmal nach einer Zeit $t_2$, die vor der Zeit $t_1$ liegt, und dann wiederum zum Zeitpunkt $t_1$, der dem Zeitpunkt $t_1$ der Fig. 1 entspricht. Durch den relativen Schlupf als Quotienten aus dem Integral über den Stickoxid-Massenstrom nach und vor dem Stickoxid-Speicherkatalysator und dessen in Beziehung setzen mit einem vorgegebenen, von einem Abgasgrenzwert ableitbaren Stickoxid-Konvertierungsgrad wird erreicht, dass zum Umschaltzeitpunkt, zu dem die Umschaltbedingung erfüllt ist, der Quotient der Integralwerte $X_2$ und $X_3$ zum Zeitpunkt t2 und der Quotient der Integralwerte $X_1$ und $X_0$ zum Zeitpunkt t1 sowie auch der Quotient aus der Differenz der Integralwerte $X_1 - X_2$ und $X_0 - X_3$ zum Zeitpunkt

$t_1$ stets gleich dem vorgegebenen Umschaltschwellwert K ist. Ebenso entspricht der Quotient der Integralwerte $X_1$ und $X_0$ zum Zeitpunkt $t_1$ (Umschaltzeitpunkt) der Fig. 1, d. h. beim neuwertigen Stickoxid-Speicherkatalysator diesem Umschaltschwellwert K, so dass durch die erfindungsgemäße Bezugnahme auf den Stickoxid-Konvertierungsgrad stets sichergestellt ist, dass eine Entladung dann stattfindet, wenn dies zur Erfüllung der auf einen bestimmten Abgasgrenzwert zurückgehenden Konvertierungsgrad erforderlich ist. D. h., dass die jeweils im Stickoxid-Speicherkatalysator vorhandene Einspeicherungskapazität entsprechend dem Alterungszustand des Stickoxid-Speicherkatalysators voll ausgenutzt werden kann.

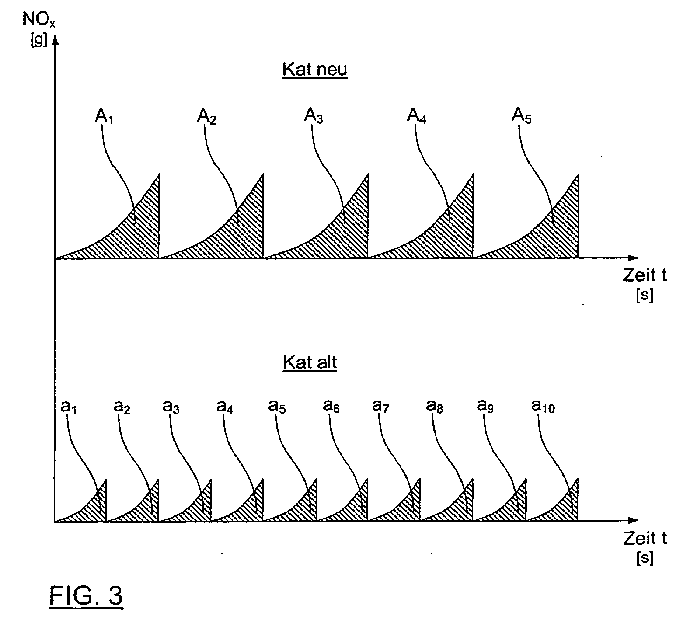

Wie dies insbesondere aus der Fig. 3 hervorgeht, wird durch die erfindungsgemäße Verfahrensweise erreicht, dass der Abgasgrenzwert stets eingehalten wird, da die Anzahl der Entladungen zwar mit zunehmender Alterung des Katalysators ansteigt, diese jedoch keinerlei Einfluss auf die Abgasmengen als solche hat, da die Anzahl der Entladungen zu jedem Alterungszeitpunkt so optimal an die erforderliche Konvertierungsrate und damit den vorgegebenen Abgasgrenzwert angepasst wird, dass dieser Abgasgrenzwert und damit die erforderliche Konvertierungsrate pro Abgasgrenzwert-Zeitspanne nicht überschritten wird. So entspricht die in der Fig. 3 auf der oberen Abszisse pro Entladevorgang abgegebene und schraffiert dargestellte Abgasmenge als Summe der Abgasmengen $A_1$, $A_2$, $A_3$, $A_4$ und $A_5$, wobei hier für den Sonderfall Konstantbetriebspunkt der Brennkraftmaschine $A_1 = A_2 = A_3 = A_4 = A_5$ ist, genau der auf der unteren Abszisse dargestellten Abgasmenge als Summe der Flächen $a_1$ bis $a_{10}$, wobei auch hier für den Sonderfall Konstantbetriebspunkt der Brennkraftmaschine $a_1 = a_2 = a_3 = ... = a_{10}$ ist. Zudem ist hier die Summe der Flächenintegrale der Nach-Katemissionen beim neuen und beim gealterten Speicherkatalysator nahezu gleich.

Das heißt, dass über die gleiche Zeitspanne betrachtet beim gealterten Stickoxid-Speicherkatalysator nur die Zahl der Entladungen steigt, nicht jedoch die während dieser Zeitspanne abgegebene Stickoxidmenge, so dass ein vorgegebener Emissionsgrenzwert als Abgasgrenzwert dadurch stets eingehalten werden kann.

Der Vorteil der erfindungsgemäßen Verfahrensweise zeigt sich auch im in der Fig. 4 dargestellten Diagramm des Kraftstoffverbrauchs über den Emissionen.

In diesem Diagramm ist einmal die Betriebslinie als Applikationslinie $B_{neu}$ für einen neuen Stickoxid-Speicherkatalysator und eine Betriebslinie als Applikationslinie $B_{alt}$ für einen gealterten Stickoxid-Speicherkatalysator dargestellt. Dieses Diagramm zeigt, dass bei der erfindungsgemäßen Verfahrensführung der Stickoxid-Speicherkatalysator, wie dies in der Fig. 4 durch Bezugszeichen 1 gezeigt ist, mit niedrigem Verbrauch ohne ein Vorhalten der Katalysatoralterung, wie dies bei der Verfahrensführung gemäß dem gattungsgemäßen Stand der Technik der Fall ist und dies in der Fig. 4 mit 1' und strichliert eingezeichnet ist, möglich ist, so dass im Verlauf der Katalysatoralterung durch die gesteigerte Anzahl der Entladungen zwar der Verbrauch ansteigt, jedoch keine Überschreitung der Emissionsgrenze erfolgt. Im Gegensatz zur Betriebsweise gemäß dem Stand der Technik ist hier zwar bei der erfindungsgemäßen Betriebsweise das Abgasergebnis beim neuen Speicherkatalysator "schlechter", liegt jedoch dauerhaft unter dem vorgeschriebenen Abgasgrenzwert. Das heißt, dass mit der erfindungsgemäßen Betriebsweise eine stets optimierte Betriebsweise möglich ist, ohne dass ein unnötiges Vorhalten beim neuen Speicherkatalysator stattfindet.

## Patentansprüche

**1.** Verfahren zum Betreiben eines Stickoxid-Speicherkatalysators einer Brennkraftmaschine insbesondere eines Kraftfahrzeuges,
bei dem von der Brennkraftmaschine erzeugte Stickoxide in einer ersten Betriebsphase, Magerphase, als Einspeicherphase für eine bestimmte Einspeicherzeit in den Stickoxid-Speicherkatalysator eingespeichert werden, und
bei dem nach Ablauf der Einspeicherzeit zu einem bestimmten Umschaltzeitpunkt für eine bestimmte Entladezeit auf eine zweite Betriebsphase als Entladungsphase umgeschaltet wird, in der die während der Einspeicherzeit eingespeicherten Stickoxide aus dem Stickoxid-Speicherkatalysator ausgespeichert werden,
wobei der Umschaltzeitpunkt in der Einspeicherphase in Abhängigkeit von einem Stickoxid-Schlupf als Differenz zwischen dem in den Stickoxid-Speicherkatalysator eingeströmten Stickoxid-Massenstrom und dem aus dem Stickoxid-Speicherkatalysator ausgeströmten Stickoxid-Massenstrom jeweils bezogen auf die Einspeicherzeit ermittelt wird,
**dadurch gekennzeichnet,**
**dass** zur Festlegung des Umschaltzeitpunktes von der Einspeicherphase auf die Entladephase ein relativer Stickoxid-Schlupf ermittelt wird dergestalt,
**dass** der Stickoxid-Massenstrom vor dem Stickoxid-Speicherkatalysator und der Stickoxid-Massenstrom nach dem Stickoxid-Speicherkatalysator jeweils über den Zeitraum einer Magerphase aufintegriert werden und der Quotient der Integralwerte in eine Relativbeziehung mit einem vorgebbaren, von einem Abgasgrenzwert abgeleiteten Stickoxid-Konvertierungsgrad gebracht werden dergestalt, dass beim Vorliegen dieser vorgegebenen Umschaltbedingung das Umschalten von der Einspeicherphase auf die Entladephase zum hinsichtlich Kraftstoffverbrauch und Einspeicherpotential optimierten Umschaltzeitpunkt durchgeführt wird.

2. Verfahren nach Anspruch 1, **dadurch gekennzeichnet,**
**dass** der relative Schlupf der Quotient aus dem Integral über den Stickoxid-Massenstrom nach dem Stickoxid-Speicherkatalysator und aus dem Integral über den Stickoxid-Massenstrom vor dem Stickoxid-Speicherkatalysator ist, und
**dass** dieser Quotient zur Ermittlung der Umschaltbedingung gleich einem vorgebbaren Umschaltschwellwert K gesetzt wird, der auf den vorgebbaren Stickoxid-Konvertierungsgrad zurückgeht, so dass beim Erfüllen dieser Umschaltbedingung ein Umschalten von der Einspeicherphase am Ende der somit ermittelten Einspeicherzeit auf die Entladungsphase erfolgt.

3. Verfahren nach Anspruch 2, **dadurch gekennzeichnet, dass** der Umschaltschwellwert K folgender Gleichung genügt:

# K = 1 – vorgegebene Stickoxidkonvertierungsrate

mit einer vorgegebenen Stickoxid-Konvertierungsrate von kleiner 1, vorzugsweise mit einer vorgegebenen Stickoxid-Konvertierungsrate von wenigstens 0,80, höchst bevorzugt von 0,95.

4. Verfahren nach einem der Ansprüche 1 bis 3, **dadurch gekennzeichnet, dass** der Stickoxid-Massenstrom vor dem Stickoxid-Speicherkatalysator modelliert wird.

5. Verfahren nach einem der Ansprüche 1 bis 4, **dadurch gekennzeichnet, dass** der Stickoxid-Massenstrom nach dem Stickoxid-Speicherkatalysator mittels einem Stickoxid-Sensor gemessen wird.

6. Verfahren nach Anspruch 5, **dadurch gekennzeichnet, dass** ein mittels dem Stickoxid-Sensor nach dem Stickoxid-Speicherkatalysator gemessenes Stickoxid-Massenstromsignal einer Steuer- und Regeleinrichtung zugeführt wird, in der der nach dem Stickoxid-Speicherkatalysator gemessene Stickoxid-Massenstrom über die Zeit aufintegriert wird und der so ermittelte Integralwert zusammen mit dem Integralwert des Stickoxid-Massenstroms vor dem Stickoxid-Speicherkatalysator in eine Beziehung mit dem vorgebbaren Stickoxid-Konvertierungsgrad gebracht wird zur Ermittlung des Umschaltzeitpunktes, wobei die Steuer- und Regeleinrichtung bei Vorliegen der Umschaltbedingung ein Steuersignal abgibt zum Umschalten des Stickoxid-Speicherkatalysators von der Einspeicherphase auf die Entladephase.

7. Steuer- und Regeleinrichtung zur Verwendung in einem Verfahren nach einem der Ansprüche 1 bis 6, die die Einspeicherung von der Brennkraftmaschine erzeugter Stickoxide in einer ersten Betriebsphase, Magerphase, als Einspeicherphase für eine bestimmte Einspeicherzeit in den Stickoxid-Speicherkatalysator steuert, und
die nach Ablauf der Einspeicherzeit zu einem bestimmten Umschaltzeitpunkt für eine bestimmte Entladezeit den Stickoxid-Speicherkatalysator auf eine zweite Betriebsphase als Entladungsphase umschaltet zur Ausspeicherung der während der Einspeicherzeit eingespeicherten Stickoxide aus dem Stickoxid-Speicherkatalysator, wobei die Steuer- und Regeleinrichtung den Umschaltzeitpunkt in der Einspeicherphase in Abhängigkeit von einem Stickoxid-Schlupf als Differenz zwischen dem in den Stickoxid-Speicherkatalysator eingeströmten Stickoxid-Massenstrom und dem aus dem Stickoxid-Speicherkatalysator ausgeströmten Stickoxid-Massenstrom jeweils bezogen auf die Einspeicherzeit ermittelt,
**dadurch gekennzeichnet,**
**dass** der Steuer- und Regeleinrichtung ein mittels einem Stickoxid-Sensor nach einem Stickoxid-Speicherkatalysator gemessenes Stickoxid-Massenstromsignal zuführbar ist zur Aufintegration des nach dem Stickoxid-Speicherkatalysator gemessenen Stickoxid-Massenstroms über die Zeit, und,
**dass** der Quotient der Integralwerte des Stickoxid-Massenstroms vor und nach dem Stickoxid-Speicherkatalysator von der Steuer- und Regeleinrichtung in eine Relativbeziehung mit einem vorgebbaren, von einem Abgasgrenzwert abgeleiteten Stickoxid-Konvertierungsgrad bringbar ist zur Ermittlung des hinsichtlich Kraftstoffverbrauch und Einspeicherpotential optimierten Umschaltzeitpunktes, wobei die Steuer- und Regeleinrichtung bei Vorliegen dieser vorgegebenen Umschaltbedingung ein Steuersignal abgibt zum Umschalten des Stickoxid-Speicherkatalysators von der Einspeicherphase auf die Entladephase.

**Claims**

1. A method for operating a nitrogen oxide storage-type catalytic converter of an internal combustion engine, particularly of a motor vehicle,

wherein nitrogen oxides produced by the internal combustion engine are fed in a first operating phase (lean phase) as the storage phase, for a certain storage time, into the nitrogen oxide storage-type catalytic converter, and wherein, after the storage time has elapsed, there is a switch to a second operating phase, as the discharging phase, at a certain switchover time for a certain discharge time, in which case the nitrogen oxides fed in during the storage time are removed from the nitrogen oxide storage-type catalytic converter,

wherein the switchover time in the storage phase is determined on the basis of a nitrogen oxide slip as the difference between the nitrogen oxide mass flow that flows into the nitrogen oxide storage-type catalytic converter and the nitrogen oxide mass flow flowing out of it, related to the storage time,

**characterised in that**

a relative nitrogen oxide slip is determined to establish the switchover point from the storage to the discharge phase, in such a manner

that the nitrogen oxide mass flow before the nitrogen oxide storage-type catalytic converter and the nitrogen oxide mass flow after it are integrated over the period of a lean phase, and the quotient of the integral values is brought into a relative relationship with a predeterminable degree of nitrogen oxide conversion derived from an exhaust limit value so that if this predetermined switchover condition prevails, the switchover from the storage phase to the discharge phase is carried out at the switchover time that has been optimised in terms of fuel consumption and storage potential.

2. The method according to Claim 1, **characterised in that**

the relative slip is the quotient of the integral over the nitrogen oxide mass flow after the nitrogen oxygen storage-type catalytic converter and the integral over the nitrogen oxide mass flow before it, and **in that**

this quotient is set equal to a predeterminable switchover threshold value K for determining the switchover condition, which value returns to the predeterminable nitrogen oxide degree of conversion so that when this switchover condition is met, a switchover from the storage phase at the end of the storage time thus determined to the discharge phase takes place.

3. The method according to Claim 2, **characterised in that** the threshold value K conforms to the following equation:

$$K = 1 - \text{predetermined nitrogen oxide conversion rate}$$

with a predetermined nitrogen oxide conversion rate of less tan 1, preferably with a predetermined nitrogen oxide conversion rate of at least 0.08, preferably with a maximum of 0.95.

4. The method according to one of Claims 1 to 3, **characterised in that** the nitrogen oxide mass flow before the nitrogen oxide storage-type catalytic converter is modelled.

5. The method according to one of Claims 1 to 4, **characterised in that** the nitrogen oxide mass flow after the nitrogen oxide storage-type catalytic converter is measured by means of a nitrogen oxide sensor.

6. The method according to Claim 5, **characterised in that** a nitrogen oxide mass flow signal measured after the nitrogen oxide storage-type catalytic converter is fed to a control and regulating device in which the nitrogen oxide mass flow measured after the nitrogen oxide storage-type catalytic converter is integrated over time and the integral value thus determined is brought together with the integral value of the nitrogen oxide mass flow before the nitrogen oxide storage-type catalytic converter into a relationship with the predeterminable nitrogen oxide degree of conversion to determine the switchover time, wherein the control and regulating device transmits a control signal if the switchover condition is met for switching over the nitrogen oxide storage-type catalytic converter from the storage to the discharge phase.

7. A control and regulating device for use in a method according to one of Claims 1 to 6, which controls the storage of nitrogen oxides produced by the internal combustion engine in a first operating phase (lean phase) as the storage phase for a certain storage time in the nitrogen oxide storage-type catalytic converter, and which, after the storage time has elapsed, switches the nitrogen oxide storage-type catalytic converter to a second operating phase, as discharge phase, at a certain switchover time for a certain discharge time, for removing the nitrogen oxides stored during the storage time from the nitrogen oxide storage-type catalytic converter, wherein the control and regulating device determines the switchover time in the storage phase as a function of a nitrogen oxide sip as the difference between the nitrogen oxide mass flow flowing into the nitrogen oxide storage-type catalytic converter and the nitrogen oxide mass flow flowing out of the nitrogen oxide storage-type catalytic converter, related to the storage time,

**characterised in that**

the control and regulating device is a nitrogen oxide mass flow signal that is measured after a nitrogen oxide storage-type catalytic converter and can be fed to a nitrogen oxide sensor for integrating the nitrogen oxide mass flow measured after the nitrogen oxide storage-type catalytic converter over time, and **in that**

the quotient of the integral values of the nitrogen oxide mass flow before and after the nitrogen oxide storage-type catalytic converter can be brought from the control and regulating device to a relative relationship with a predeterminable nitrogen oxide degree of conversion derived from an exhaust limit value for determining the switchover time that has been optimised in terms of fuel consumption and storage potential, wherein the control and regulating device transmits a control signal, if this predetermined switchover condition prevails, for switching over the nitrogen oxide storage-type catalytic converter from the storage phase to the discharge phase.

## Revendications

1. Procédé permettant de faire fonctionner un catalyseur accumulateur d'oxydes d'azote d'un moteur à combustion interne notamment d'un véhicule automobile

   avec lequel les oxydes d'azote générés par le moteur à combustion interne au cours d'une première phase de fonctionnement, phase pauvre, en tant que phase d'accumulation sont accumulés pour un temps d'accumulation déterminé dans le catalyseur accumulateur d'oxydes d'azote, et

   avec lequel, de la fin du temps d'accumulation, à un moment de commutation déterminé pour un temps de décharge déterminé, ou passe à une seconde phase de fonctionnement en tant que phase de déchargement au cours de laquelle les oxydes d'azote accumulés au cours du temps d'accumulation sont extraits du catalyseur accumulateur d'oxydes d'azote,

   le moment de commutation dans la phase d'accumulation étant déterminé en fonction d'un glissement d'oxydes d'azote en tant que différence entre le flux massique d'oxydes d'azote arrivé dans le catalyseur accumulateur d'oxydes d'azote et le flux massique d'oxydes d'azote s'écoulant du catalyseur accumulateur d'oxydes d'azote en se référant respectivement au temps d'accumulation,

   **caractérisé en ce que**

   pour l'établissement au moment de commutation de la phase d'accumulation à la phase de décharge, un glissement relatif d'oxydes d'azote est déterminé de sorte que le flux massique d'oxydes d'azote avant le catalyseur accumulateur d'oxydes d'azote et le flux massique après le catalyseur accumulateur d'oxydes d'azote est intégré respectivement sur une période d'une phase pauvre et le quotient des valeurs intégrales est donné dans un rapport relatif avec un degré de conversion d'oxydes d'azote prédéfinissable et déductible d'une valeur limite des gaz d'échappement, de sorte que, si cette condition de commutation prédéfinie est remplie, le passage de la phase d'accumulation à la phase de décharge est effectué au moment de commutation optimalisé en ce qui concerne la consommation de carburant et le potentiel d'accumulation.

2. Procédé selon la revendication 1, **caractérisé en ce que**

   le glissement relatif est le quotient de l'intégrale sur le flux massique d'oxydes d'azote après le catalyseur accumulateur d'oxydes d'azote et de l'intégrale sur le flux massique d'oxydes d'azote avant le catalyseur accumulateur d'oxydes d'azote, et

   que, pour la détermination de la condition de commutation, ce quotient est équivalent à une valeur seuil de commutation prédéfinie K qui remonte au degré de conversion prédéfinissable des oxydes d'azote, de sorte que, lorsque cette condition de commutation est remplie, il s'ensuit un passage de la phase d'accumulation, à la fin du temps d'accumulation ainsi déterminé, à la phase de déchargement.

3. Procédé selon la revendication 2, **caractérisé en ce que** la valeur seuil de commutation K satisfait à l'équation suivante :

9

$$K = 1 - \text{taux de conversion prédéfini des oxydes d'azote.}$$

avec un taux de conversion des oxydes d'azote prédéfini inférieur à.1, de préférence avec un taux de conversion des oxydes d'azote d'au moins 0,80 et hautement recommandé de 0,95.

4. Procédé selon l'une des revendications 1 à 3, **caractérisé en ce que** le flux massique d'oxydes d'azote est modelé avant le catalyseur accumulateur d'oxydes d'azote.

5. Procédé selon l'une des revendications 1 à 4, **caractérisé en ce que** le flux massique d'oxydes d'azote est mesuré après le catalyseur accumulateur d'oxydes d'azote au moyen d'un capteur d'oxydes d'azote.

6. Procédé selon la revendication 5, **caractérisé en ce qu'**un signal de flux massique d'oxydes d'azote mesuré au moyen du capteur d'oxydes d'azote après le catalyseur accumulateur d'oxydes d'azote est amené à un dispositif de commande et de réglage dans lequel le flux massique d'oxydes d'azote mesuré après le catalyseur accumulateur d'oxydes d'azote est intégré dans le temps et la valeur intégrale ainsi déterminée, conjointement avec la valeur intégrale du flux massique d'oxydes d'azote avant le catalyseur accumulateur d'oxydes d'azote, est mise en relation avec le degré de conversion d'oxydes d'azote prédéfinissable pour la détermination du moment de commutation, le dispositif de commande et de réglage émettant un signal de commande, lorsque la condition de commutation est remplie, pour le passage du catalyseur accumulateur d'oxydes d'azote de la phase d'accumulation à la phase de décharge.

7. Dispositif de commande et de réglage pour une utilisation dans un procédé selon l'une des revendications 1 à 6, qui commande l'accumulation des oxydes d'azote générés par le moteur à combustion interne au cours d'une première phase de fonctionnement (phase pauvre) en tant que phase d'accumulation pour un temps d'accumulation déterminé dans le catalyseur accumulateur d'oxydes d'azote, et
qui, à la fin du temps d'accumulation, à un moment de commutation déterminé pour un temps de décharge déterminé, fait passer le catalyseur accumulateur d'oxydes d'azote à une seconde phase de fonctionnement en tant que phase de déchargement pour l'extraction des oxydes d'azote du catalyseur accumulateur des oxydes d'azote, accumulés pendant le temps d'accumulation, le dispositif de commande et de réglage déterminant le moment de commutation dans la phase d'accumulation en fonction du glissement d'oxydes d'azote en tant que différence entre le flux massique d'oxydes d'azote arrivé dans le catalyseur accumulateur d'oxydes d'azote et le flux massique d'oxydes d'azote écoulé du catalyseur accumulateur d'oxydes d'azote en se référant respectivement au temps d'accumulation,
**caractérisé en ce que**
un signal de flux massique d'oxydes d'azote mesuré au moyen d'un capteur d'oxydes d'azote après le catalyseur accumulateur d'oxydes d'azote est amené au dispositif de commande et de réglage pour l'intégration du flux massique d'oxydes d'azote mesuré après le catalyseur accumulateur d'oxydes d'azote dans le temps, et
**en ce que** le quotient des valeurs intégrales du flux massique d'oxydes d'azote avant et après le catalyseur accumulateur d'oxydes d'azote est donné dans un rapport relatif avec un degré de conversion des oxydes d'azote prédéfini et déductible de la valeur seuil des gaz d'échappement pour la détermination du moment de commutation optimalisé en ce qui concerne la consommation de carburant et le potentiel d'accumulation, le dispositif de commande et de réglage émettant un signal de commande lorsque cette condition de commutation prédéfinie est remplie pour faire passer le catalyseur accumulateur d'oxydes d'azote de la phase d'accumulation à la phase de décharge.

**FIG. 1**

$\Sigma\, NO_x$ [g/s]

$X_0$

Integral $NO_x$ vor Kat

$X_1$

$t_1$

Zeit t [s]

Integral $NO_x$ nach Kat (Kat neu)

**FIG. 2**

$\Sigma\, NO_x$ [g/s]

$X_0$

Integral $NO_x$ vor Kat

$X_3$

$X_1$

$X_2$

$t_2$

$t_1$

Zeit t [s]

Integral $NO_x$ nach Kat (Kat alt)

NO$_x$
[g]

Kat neu

$A_1$    $A_2$    $A_3$    $A_4$    $A_5$

Zeit t
[s]

Kat alt

$a_1$  $a_2$  $a_3$  $a_4$  $a_5$  $a_6$  $a_7$  $a_8$  $a_9$  $a_{10}$

Zeit t
[s]

FIG. 3

Verbrauch

Emissionsgrenze

2

$B_{alt}$

1'

$B_{neu}$

1

Emissionen

**FIG. 4**

$NO_x$ [g]

absoluter Schlupf

reduzierter Schlupf

Zeit t [s]

**FIG. 5** (Stand der Technik)